# EUROPEAN PATENT SPECIFICATION

(11) **EP 1 298 644 B1**
(45) Date of publication and mention of the grant of the patent: **28.05.2008**
(21) Application number: 00940839.4
(22) Date of filing: 26.06.2000
(51) Int. Cl.: B60R 16/02, G10L 15/26

(54) **Equipment operation system**
System zum Betreiben eines Gerätes
Système d'opération d'équipements

(43) Date of publication of application: 02.04.2003
(73) Proprietor: MITSUBISHI DENKI KABUSHIKI KAISHA, Chiyoda-ku Tokyo 100-8310 (JP)
(72) Inventor: YAMAZAKI, Hidenori, Chiyoda-ku, Tokyo 100-8310 (JP)
(74) Representative: Pfenning, Meinig & Partner GbR
(86) International application number: PCT/JP2000/004188
(87) International publication number: WO 2002/001550

(56) References cited:
- EP-A- 0 911 808
- EP-A1- 0 607 615
- EP-A2- 0 872 827
- WO-A-96/23298
- JP-A- 2 310 599
- JP-A- 3 155 598
- JP-A- 7 222 248
- JP-A- 62 239 199
- US-A- 5 165 007
- US-A- 5 450 525
- US-A- 5 583 965
- US-A- 5 651 096
- US-A- 5 873 064

## Description

### Technical Field

This invention relates to an equipment operation system, which accepts operations of an equipment ordered by user's voice, and also relates to the equipment operation method thereof.

### Background Art

For example, there has been a demand for a voice recognition device, which is loaded on a movable body such as an automobile and recognizes a voice uttered by a user for operating an equipment, e.g., a car audio device, a car navigation device, a telephone terminal or the like, and generates an operation signal for the equipment, with a view to reproducing physical and psychological burdens placed on a user in the operation of an equipment during running, and contributing to safe driving.

On the other hand, there has been a demand for making connection by a local area network as one of connection types of the above-described equipments. The purpose thereof is to secure a reduction in a wiring size and extendibility in the connection of equipments, which tends to be strongly required for the movable bodies

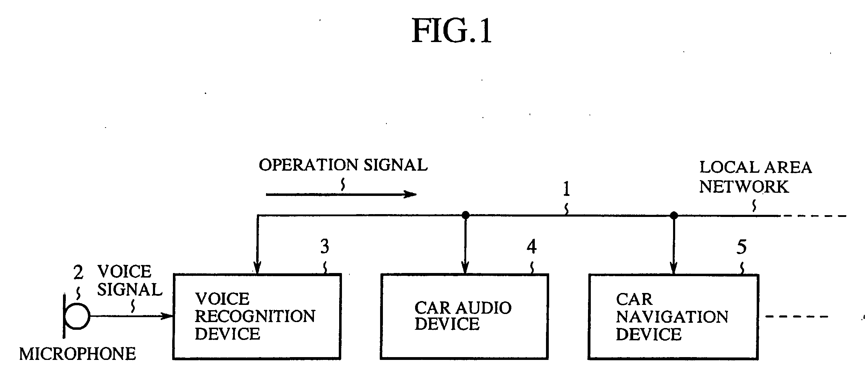

Fig. 1 is a schematic diagram showing a conventional equipment operation system, which meets the foregoing requests concerning the equipment operation by voice recognition and the equipment connection by a local area network. In the drawing, a reference numeral 1 denotes a local area network; 2 a microphone for inputting a voice uttered by a user and outputting a voce signal; 3 a voice recognition device for extracting a feature parameter by analyzing the voice signal outputted from the microphone 2, specifying an operation signal corresponding to the feature parameter by referring to voice recognition dictionary data, and outputting the operation signal to the local area network 1; 4 a car audio device (equipment to be controlled), which is connected to the local area network 1 and adapted to execute an operation intended by the operation signal upon receiving the operation signal from the voice recognition device 3 through the local area network 1; and 5 a car navigation device (equipment to be controlled), which is connected to the local area network 1 and adapted to execute an operation intended by the operation signal upon receiving the operation signal from the voice recognition device 3 through the local area network 1.

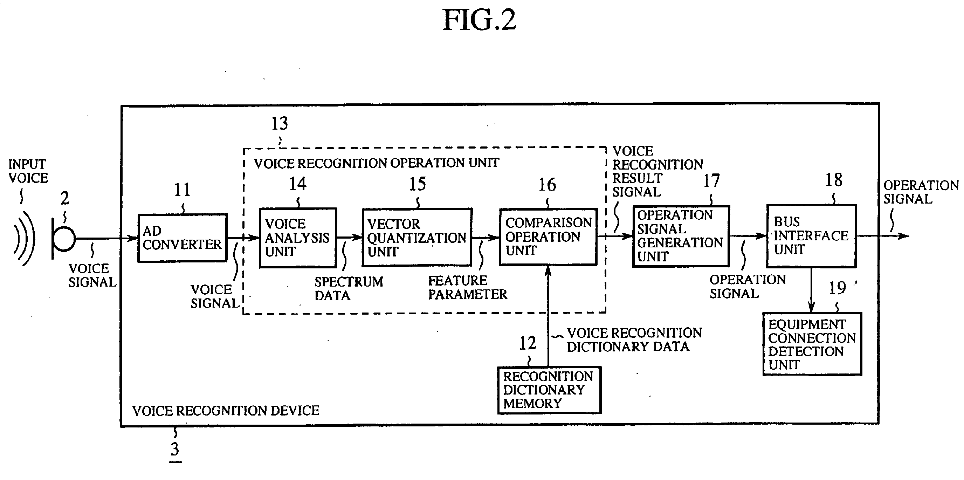

Fig. 2 is a schematic diagram showing the internal configuration of the voice recognition device 3. In the drawing, a reference numeral 11 denotes an AD converter for executing analog-digital conversion for an analog voice signal received from the microphone 2, and outputting a digital voice signal; 12 a recognition dictionary memory for storing voice recognition dictionary data, which is stored in a storage device such as a memory IC, a hard disk, or the like.

A reference numeral 13 denotes a voice recognition operation unit for executing a voice recognition operation; 14 a voice analysis unit for analyzing a voice signal by executing fast Fourier transformation (FFT), and thereby converting the voice signal into spectrum data; 15 a vector quantization unit for classifying the spectrum data obtained by the conversion at the voice analysis unit 14 into a specific spectrum pattern prepared beforehand, and outputting quantized data (feature parameter) as numerical data corresponding to the spectrum pattern; and 16 a comparison unit for performing a comparison operation between the feature parameter outputted from the vector quantization unit 15 and the voice recognition dictionary data stored in the recognition dictionary memory 12, and outputting voice recognition dictionary data having the highest similarity to the feature parameter as a voice recognition result signal.

A reference numeral 17 denotes an operation signal generation unit for generating an operation signal from the voice recognition result signal outputted from the comparison operation unit 16; 18 a bus interface unit for outputting the operation signal generated by the operation signal generation unit 17 to the local area network 1; and 19 an equipment connection detection unit for detecting an equipment to be controlled, which equipment being connected to the local area network 1.

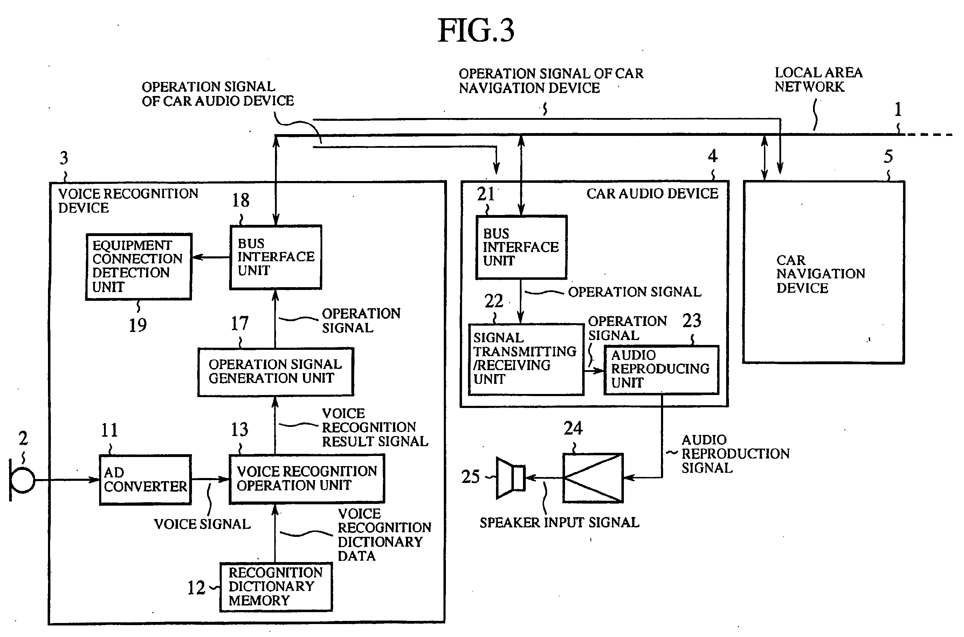

Fig. 3 is a schematic diagram showing in detail the configuration of the equipment operation system of Fig. 1. In the drawing, a reference numeral 21 denotes a bus interface unit for receiving the entry of the operation signal outputted from the voice recognition device 3 through the local area network 1; 22 a signal transmitting/receiving unit for executing the reception processing or the like of the operation signal; 23 an audio reproducing unit for executing an operation intended by the operation signal received by the signal transmitting/receiving unit 22, the audio reproducing unit 23 being adapted to output an audio reproduction signal by actuating a CD player, for example when the activation of the CD player is intended by the operation signal; 24 an audio amplifier for amplifying the audio reproduction signal, and generating a speaker input signal; and 25 a speaker for outputting an audio reproduced sound according to the speaker input signal.

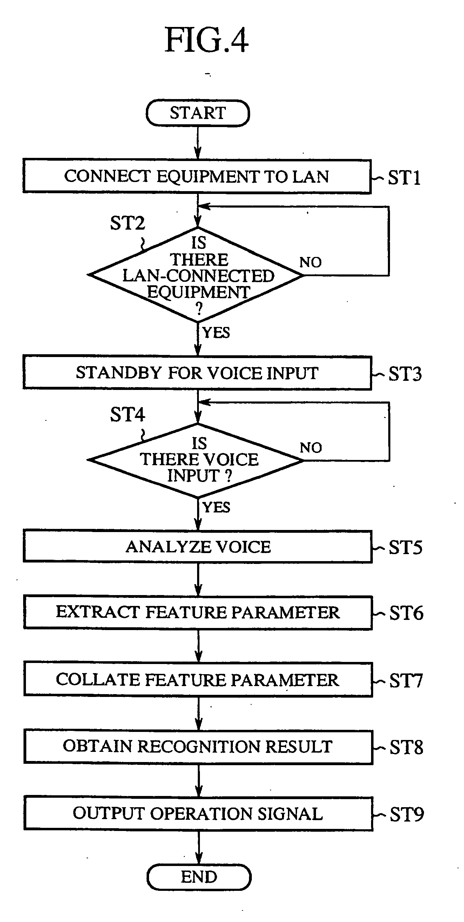

Fig. 4 is a flowchart showing the processing of the voice recognition device 3.

Next, an operation will be described.

After the system is actuated, when the user connects an equipment to be controlled to the local area network 1 (step ST1), the equipment connection detection unit 19 of the voice recognition device 3 verifies the presence of the equipment to be controlled (hereinafter may be referred to just as "controlled equipment"), and the type of the equipment connected to the local area network 1 (step ST2).

If it is determined that the controlled equipment is connected to the local area network 1, voice recognition dictionary data regarding the operation of the controlled equipment is prepared, and the process is shifted to a standby state for the entry of a voice by the user (step ST3). On the other hand, if it is determined that the controlled equipment is not connected to the local area network 1, a standby state for the connection of the controlled equipment to the local area network 1 is continued.

When the user utters a voice to the microphone 2 (step ST4), the microphone 2 picks up the voice uttered by the user, and outputs a voice signal to the voice recognition device 3.

Upon reception of an analog voice from the microphone 2, the AD converter 11 of the voice recognition device 3 executes analog-digital conversion, and outputs a digital voice signal. The voice analysis unit 14 of the voice recognition device 3 analyzes the voice signal by executing fast Fourier transformation or the like, and thereby converts the voice signal into spectrum data (step ST5).

When the voice analysis unit 14 outputs the spectrum data, the vector quantization unit 15 of the voice recognition device 3 classifies the spectrum data into a specific spectrum pattern prepared beforehand, and extracts and outputs quantized data as numerical data corresponding to the spectrum pattern, i.e., a feature parameter (step ST6).

After the output of the feature parameter from the vector quantization unit 15, the comparison operation unit 16 of the voice recognition device 3 executes a comparison between the feature parameter and the voice recognition dictionary data stored in the recognition dictionary memory 12 (step ST7), and outputs voice recognition dictionary data having the highest similarity to the feature parameter as a voice recognition result signal (step ST8).

Here, the voice recognition dictionary data is generally generated by software or the like based on the text data or the like of a vocabulary regarding a voice operation command (voice uttered by the user). In addition, a voice recognition operation is generally composed of a probability operation (pattern recognition operation) such as hidden Markov model, a neural network or the like.

After the output of the voice recognition result signal from the comparison operation unit 16, the operation signal generation unit 17of the voice recognition device 3 generates an operation signal from the voice recognition result signal (step ST9).

Now, the content of the voice operation command will be described.

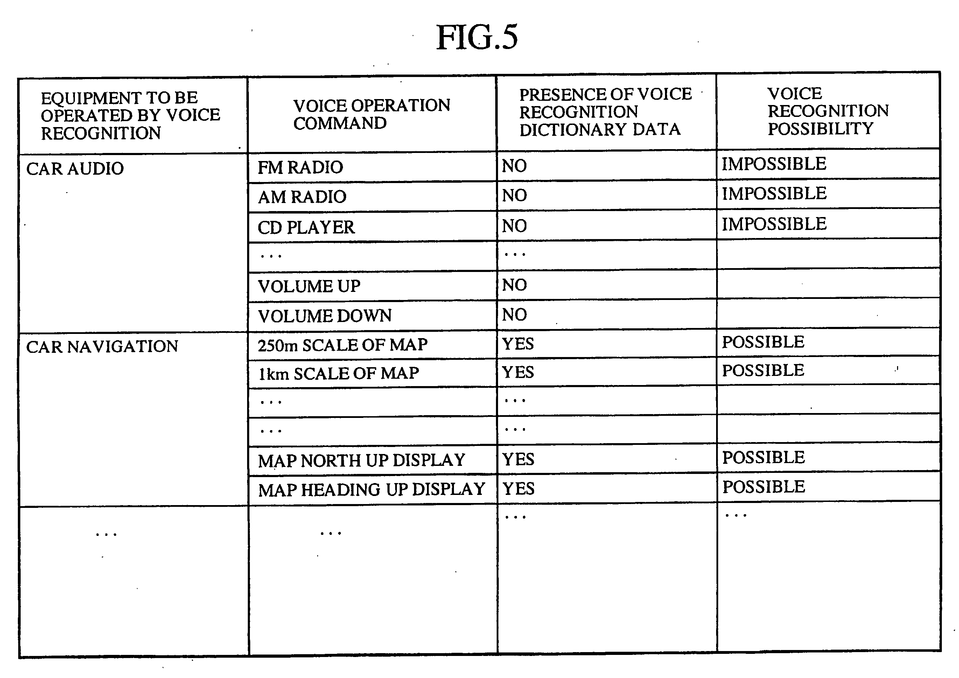

Fig. 5 is an explanatory view showing the example of a voice operation command.

For example, when operating the car audio device 4, the user utters "FM RADIO" toward the microphone 2. When the voice recognition device 3 recognizes the "FM RADIO", the car audio device 4 sets a radio receiving band to FM.

Similarly, when operating the car navigation device, the user utters "250m IN MAP SCALE" toward the microphone 2. When the voice recognition device 3 recognizes the "250m IN MAP SCALE", the car navigation device 5 displays the map of 250m scale.

However, in voice recognition, voice recognition dictionary data corresponding to the voice operation command are necessary. If no voice recognition dictionary data corresponding to a specific voice operation command is present in the recognition dictionary memory 12, it is impossible to perform voice recognition even when the user utters a voice operation command.

For example, even when the car audio device 4 is connected to the local area network 1, as shown in Fig. 5, if no voice recognition dictionary data corresponding to the voice operation command of the car audio device 4 is present, the car audio device 4 cannot be operated by voice recognition.

When the operation signal generation unit 17 generates an operation signal as described above, the bus interface unit 18 of the voice recognition device 3 outputs the operation signal to the local area network 1. Here, for convenience of explanation, it is assumed that the operation signal of the car audio device 4 has been outputted.

After the output of the operation signal of the car audio device 4 by the voice recognition device 3 to the local area network 1, the bus interface unit 21 of the car audio device 4 receives the entry of the operation signal from the local area network 1, outputted from the voice recognition device 3, and the signal transmitting/receiving unit 22 of the car audio device 4 receives the operation signal.

After the reception of the operation signal by the signal transmitting/receiving unit 22, the audio reproducing unit 23 of the car audio device 4 executes an operation intended by the operation signal. For example, if the activation of the CD player is intended by the operation signal, then an audio reproduction signal is outputted by actuating the CD player.

After the output of the audio reproduction signal from the audio reproducing unit 23, the audio amplifier 24 amplifies the audio reproduction signal, and generates a speaker input signal. The speaker 25 outputs an audio reproduced sound according to the speaker input signal.

Because of the foregoing configuration of the conventional equipment operation system, if voice recognition dictionary data corresponding to a specific voice operation command is present in the recognition dictionary memory 12, the equipment to be controlled can be operated by voice recognition. However, if no voice recognition dictionary data corresponding to a specific voice operation command is present in the recognition dictionary memory 12, the equipment to be controlled cannot be operated. Thus, for example, it was impossible to perform an operation by voice recognition by connecting a new equipment to be controlled, to the local network 1. Therefore, there was a problem such as lack of extendibility of a voice operation command following the connection of a new equipment to be controlled.

EP-A-0 911 808 discloses an equipment operation system which comprises
a voice recognition device including extracting means for extracting a feature parameter from a voice signal, and operation signal specifying means for specifying an operation signal corresponding to the feature parameter extracted by the extracting means based on voice recognition dictionary data. A communication means outputs the operation signal specified by the operation signal specifying means, and an equipment to be controlled includes storing means for storing voice recognition dictionary data and operating means for executing a predetermined operation corresponding to the operation signal when the operation signal is outputted from the communication means. The associated commands and corresponding vocabularies and grammars can be downloaded into a memory of the voice recognition device.

The present invention has been made to solve the foregoing problems, and objects of the invention are to provide an equipment operation system capable of securing the extendibility of a voice operation command following the connection of a new equipment to be controlled, and also the equipment operation method thereof, and to increase the voice recognition rate.

### Disclosure of Invention

These objects according to the invention are solved by an equipment operation system comprising the features of claim 1. Preferred embodiments are defined in the respective subclaims.

In accordance with an equipment operation system provided by the present invention, a voice recognition device refers to voice recognition dictionary data stored in the voice recognition dictionary of an equipment to be controlled when specifying an operation signal corresponding to a feature parameter.

The equipment to be controlled transfers the voice recognition dictionary data stored in the voice recognition dictionary to the voice recognition device at the time of actuating the system.

The equipment to be controlled transfers the hierarchical structure information of the voice recognition device corresponding to the hierarchical structure of the operation signal to the voice recognition device.

Thus, it is possible to deal even with a case where the operation of the equipment to be controlled is based on a complex hierarchical formation, and to increase a voice recognition rate.

According to a preferred embodiment, changing means is provided for changing the voice recognition dictionary data stored in the voice recognition dictionary of the equipment to be controlled.

Thus, it is possible to change a voice operation command when necessary.

According to a further preferred embodiment, displaying means is provided for displaying the type of the equipment to be controlled, connected to a local area network, and information regarding a controlled equipment to be operated by voice.

Thus, it is possible for a user to understand the type of the controlled equipment connected to the local area network and the controlled equipment which is operable by voice.

### Brief Description of the Drawings

Fig. 1 is a schematic diagram showing a conventional equipment operation system.
Fig. 2 is a schematic diagram showing an internal configuration of a voice recognition device 3.
Fig. 3 is a schematic diagram showing in detail a configuration of the equipment operation system of Fig. 1.
Fig. 4 is a flowchart showing the processing conducted by the voice recognition device 3.
Fig. 5 is an explanatory view showing an example of a voice operation command.
Fig. 6 is a schematic diagram showing a first exemplary equipment operation system not covered by the invention but helpful for its understanding.
Fig. 7 is a flowchart showing the processing conducted by a voice recognition device 43
Fig. 8 is a schematic diagram showing a second exemplary equipment operation system not covered by the invention but helpful for its understanding.
Fig. 9 is a flowchart showing the processing conducted by a voice recognition device 43.
Fig. 10 is a schematic diagram showing an equipment operation system according to an embodiment of the invention.
Fig. 11 is a flowchart showing a processing content of a voice recognition device 43.
Fig. 12 is an explanatory view showing a hierarchical structure example of a voice operation command.
Fig. 13 is a schematic diagram showing an third exemplary equipment operation system which can be used in connection with the invention.
Fig. 14 is a flowchart showing the processing conducted by a voice recognition device 43.
Fig. 15 is an explanatory view showing a paraphrasing example of a voice operation command.

### Best Modes for Carrying Out the Invention

Next, to explain the present invention more in detail, the best modes for carrying out the invention will be described with reference to the accompanying drawings.

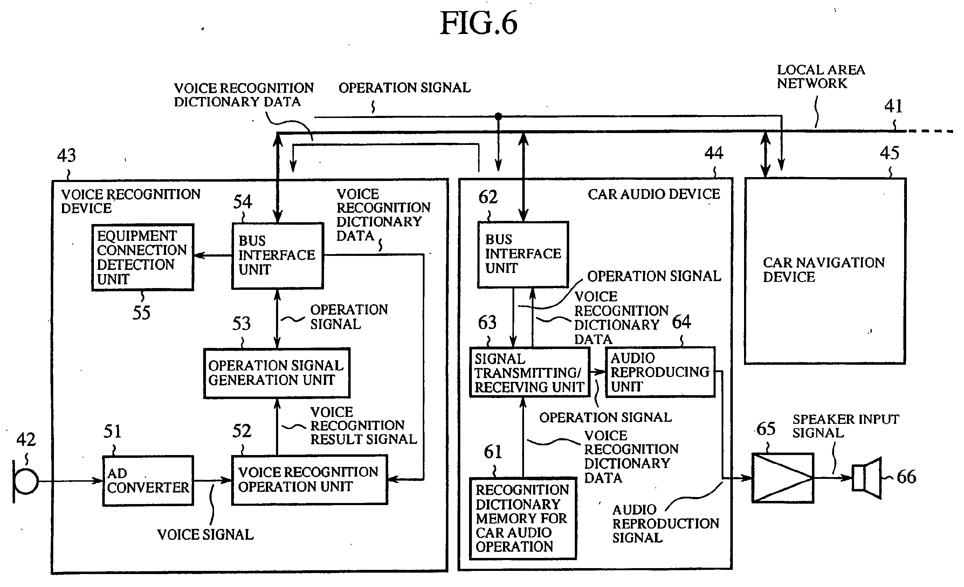

Fig. 6 is a schematic diagram showing a first exemplary equipment operation system not covered by the invention. In the drawing, a reference numeral 41 denotes a local area network as communication means; 42 a microphone for inputting a voce uttered by a user, and outputting a voice signal; 43 denotes a unit including extracting means for extracting a feature parameter from the voice signal outputted from the microphone 42, and an operation signal specifying means for specifying an operation signal corresponding to the feature parameter extracted by the extracting means based on voice recognition dictionary data, that is, a voice recognition device, which extracts the feature parameter by analyzing the voice signal outputted from the microphone 42, specifies an operation signal corresponding to the feature parameter by referring to the voice recognition dictionary data, and outputs the thus specified operation signal to the local area network 41; 44 denotes a car audio device as an equipment to be controlled, connected to the local area network 41 for executing an operation intended by the operation signal upon reception of the operation signal from the voice recognition device 43 through the local area network 41; and 45 denotes a car navigation device as an equipment to be controlled, connected to the local area network 41 for executing the operation intended by the operation signal upon reception of the operation signal from the voice recognition device 43 through the local area network 41.

A reference numeral 51 denotes an AD converter for executing analog-digital conversion for an analog voice signal received from the microphone 42, and outputting a digital voice signal; and 52 denotes a voice recognition operation unit for executing a voice recognition operation, and as in the case of the conventional voice recognition operation unit 13, the voice recognition operation unit 52 is composed of a voice analysis unit 14, a vector quantization unit 15, and a comparison operation unit 16 (see Fig. 2).

A reference numeral 53 denotes an operation signal generation unit for generating an operation signal from a voice recognition result signal outputted from the voice recognition operation unit 52; 54 a bus interface unit for outputting the operation signal generated by the operation signal generation unit 53 to the local area network 41, and receiving the entry of voice recognition dictionary data from the equipment to be controlled through the local area network 41; and 55 an equipment connection detection unit for detecting the controlled equipment connected to the local area network 41.

A reference numeral 61 denotes a car audio operation recognition dictionary memory for storing voice recognition dictionary data; 62 a bus interface unit for receiving the entry of the operation signal outputted from the voice recognition device 43 through the local area network 41, and outputting the voice recognition dictionary data stored in the car audio operation recognition dictionary memory 61 to the local area network 41; 63 a signal transmitting/receiving unit for receiving the operation signal, and transmitting the voice recognition dictionary data; 64 an audio reproducing unit for executing an operation intended by the operation signal received from the signal transmitting/receiving unit 63, which audio reproducing unit 64 being adapted to output an audio reproduction signal by actuating a CD player, for example when the activation of the CD player is intended by the operation signal; 65 an audio amplifier for amplifying the audio reproduction signal and generating a speaker input signal; and 66 a speaker for outputting an audio reproduced sound according to the speaker input signal.

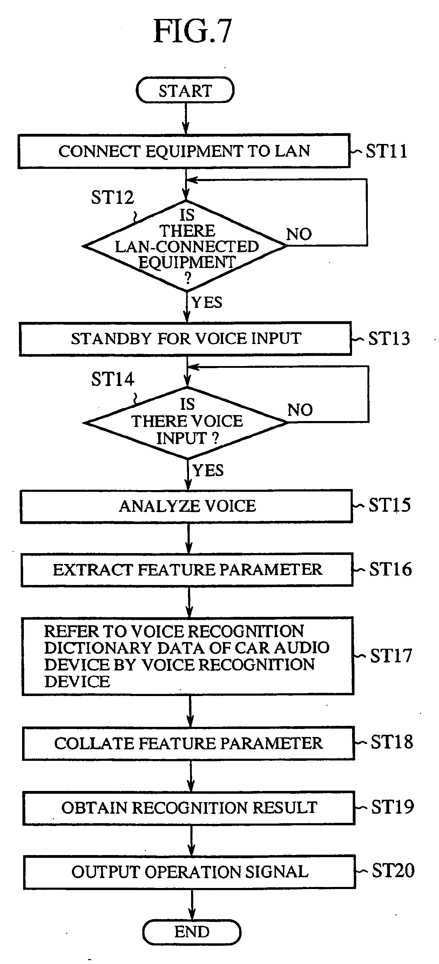

Fig. 7 is a flowchart showing the processing conducted by the voice recognition device 43.

Next, an operation will be described.

Here, for convenience of explanation, description will be made as to the case of operating the car audio device 44.

When a user connects an equipment to be controlled to the local area network 41 after the actuation of the system (step ST11), the equipment connection detection unit 55 of the voice recognition device 43 verifies the presence of the connected equipment to be controlled, and the type of the equipment to be controlled connected to the local area network 41 (step ST12).

If it is determined that the controlled equipment is connected to the local area network 41, the process is shifted to a standby state for the entry of a voice by the user (step ST13). On the other hand, if it is determined that the controlled equipment is not connected to the local area network 41, then a standby state for the connection of the controlled equipment to the local area network 41 is continued.

When the user utters a voice to the microphone 42 (referred to as a voice operation command, hereinafter) (step ST14), the microphone 42 picks up the voice operation command, and outputs a voice signal to the voice recognition device 43.

Upon receiving an analog voice signal from the microphone 42, the AD converter 51 of the voice recognition device 43 executes an analog-digital conversion, and outputs a digital voice signal.

The voice analysis unit 14 in the voice recognition operation unit 52 of the voice recognition device 43 executes fast Fourier transformation to analyze the voice signal, and thereby converts the voice signal into spectrum data (step ST15).

When the spectrum data from the voice analysis unit 14 is outputted, the vector quantization unit 15 in the voice recognition operation unit 52 classifies the spectrum data into a specific spectrum pattern prepared beforehand, and extracts and outputs a quantized data as numerical data corresponding to the spectrum pattern, i.e., a feature parameter (step ST16).

When the feature parameter from the vector quantization unit 15 is outputted, the comparison operation unit 16 in the voice recognition operation unit 52 inputs a voice recognition dictionary data regarding the operation of the car audio device 44 from the recognition dictionary memory 61 for a car audio operation, loaded in the car audio device 44, through the bus interface unit 54 (step ST17).

Then, the comparison operation unit 16 in the voice recognition operation unit 52 performs a comparison between the feature parameter outputted from the vector quantization unit 15 and the voice recognition dictionary data regarding the operation of the car audio device 44 (step ST18), and outputs a voice recognition dictionary data having the highest similarity to the feature parameter as a voice recognition result signal (step ST19).

When the voice recognition result signal is outputted from the voice recognition operation unit 52, the operation signal generation unit 53 of the voice recognition device 43 generates an operation signal from the voice recognition result signal (step ST20).

As described above, when the operation signal generation unit 53 generates an operation signal, the bus interface unit 54 of the voice recognition device 43 outputs the thus generated operation signal to the local area network 41.

When the operation signal for the car audio device 44 is outputted from the voice recognition device 43 to the local area network 41, the bus interface part 62 of the car audio device 44 receives the entry of the operation signal outputted from the voice recognition device 43 through the local area network 41. The signal transmitting/receiving unit 63 of the car audio device 44 receives the operation signal.

After reception of the operation signal by the signal transmitting/receiving unit 63, the audio reproducing unit 64 of the car audio device 44 executes an operation intended by the operation signal. For example, if the activation of the CD player is intended by the operation signal, the CD player is actuated to output an audio reproduction signal.

When the audio reproduction signal is outputted from the audio reproducing unit 64, the audio amplifier 65 amplifies the audio reproduction signal to generate a speaker input signal. Then, the speaker 66 outputs an audio reproduced sound according to the speaker input signal.

As apparent from the foregoing, the described first exemplary system is advantageous in the following respect. That is, the voice recognition dictionary data stored in the car audio operation recognition dictionary memory 61 of the car audio device 44 are referred to when the voice recognition device 43 is to specify an operation signal corresponding to the feature parameter, in other words, when a voice recognition dictionary data having the highest similarity to the feature parameter is searched. Thus, even if the car audio device 44 is newly connected to the local area network 41, voice recognition dictionary data regarding the operation of the car audio device 44 can be obtained. As a result, it is possible to secure the extendability of a voice operation command following the connection of a new equipment to be controlled.

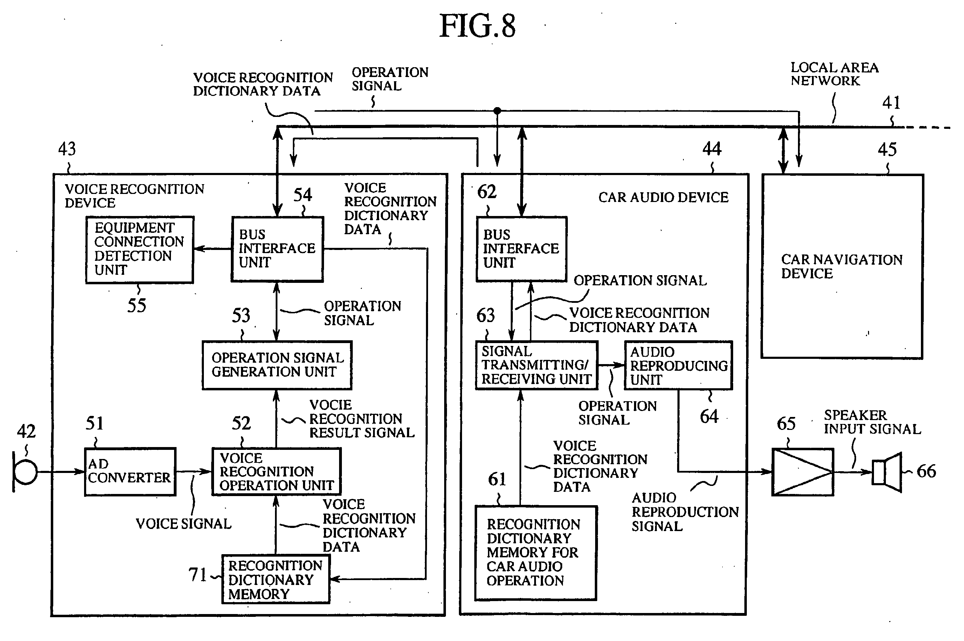

Fig. 8 is a schematic diagram showing a second exemplary equipment operation system not covered by the invention. In the drawing, reference numerals similar to those of Fig. 6 denote similar portions, and thus description thereof will be omitted.

A reference numeral 71 denotes a recognition dictionary memory for receiving and storing batch-transferred voice recognition dictionary data stored in the car audio operation recognition dictionary memory 61 of the car audio device 44.

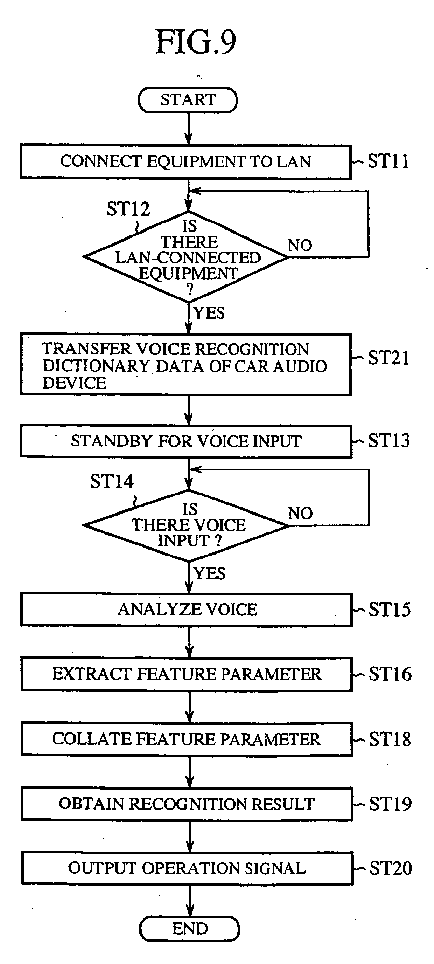

Fig. 9 is a flowchart showing the processing conducted by the voice recognition device 43.

Next, an operation will be described.

The foregoing first exemplary system has explained the arrangement as to the case where when the voice recognition device 43 is to search a voice recognition dictionary data having the highest similarity to the feature parameter, the voice recognition dictionary data stored in the car audio operation recognition dictionary memory 61 of the car audio device 44 are sequentially received and referred. However, an arrangement may be made such that the batch-transferred voice recognition dictionary data stored in the car audio operation recognition dictionary memory 61 of the car audio device 44 are first received at the time of actuating the system (step ST21), and then stored in the recognition dictionary memory 71, and by referring to the voice recognition dictionary data thus stored in the recognition dictionary memory 71, a voice recognition dictionary data having the highest similarity to the feature parameter is searched.

Accordingly, since the voice recognition dictionary data can be referred to without using the local area network 41 when the voice recognition device 43 executes the voice recognition processing, a high speed can be achieved for the voice recognition processing. As a result, it is possible to shorten a processing time required for specifying an operation signal corresponding to a feature parameter.

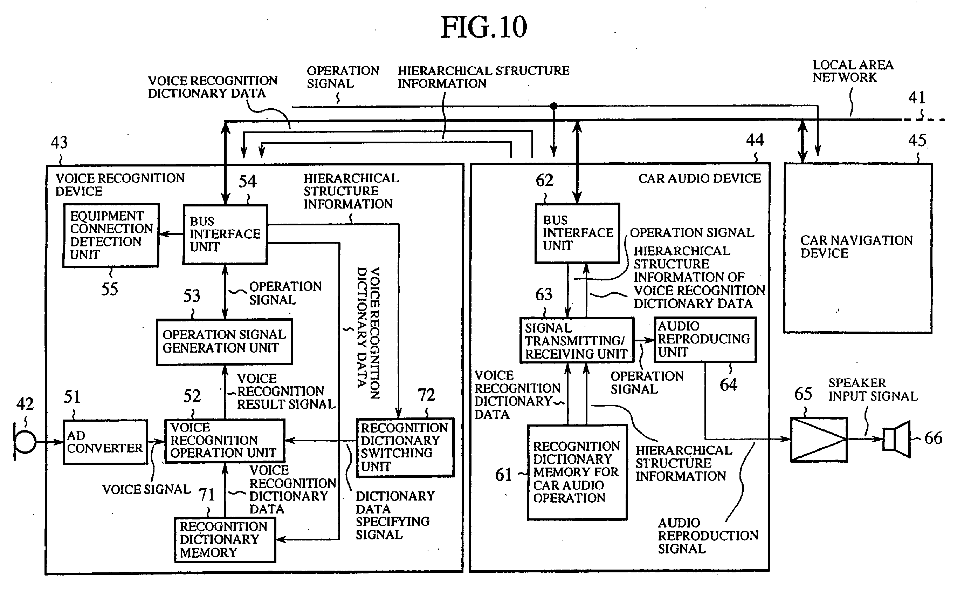

Fig. 10 is a schematic diagram showing an equipment operation system according to an embodiment of the invention. In the drawing, reference numerals similar to those of Fig. 8 denote similar portions, and thus description thereof will be omitted.

A reference numeral 72 denotes a recognition dictionary switching unit for outputting a dictionary data specifying signal used to specify a voice recognition dictionary data to be referred to according to hierarchical structure information, upon reception of the hierarchical structure information of the voice recognition dictionary data corresponding to the hierarchical structure of the operation signal stored in the car audio operation recognition dictionary memory 61 of the car audio device 44.

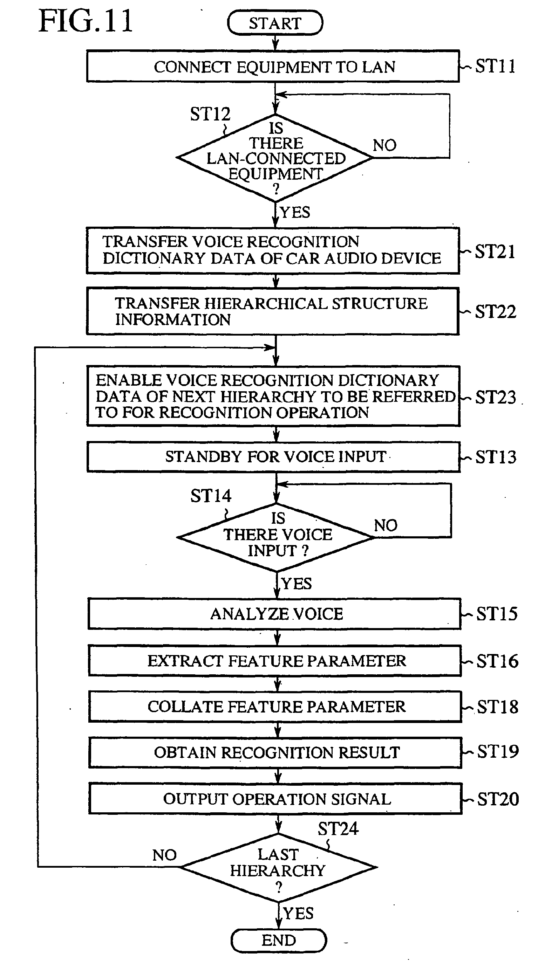

Fig. 11 is a flowchart showing the processing conducted by the voice recognition device 43.

Next, an operation will be described.

The foregoing second exemplary system showed the arrangement as to the case where the batch-transferred voice recognition dictionary data stored in the car audio operation recognition dictionary memory 61 of the car audio device 44 are first received at the time of actuating the system, and then the voice recognition dictionary data are stored in the recognition dictionary memory 71. This arrangement may further include the steps of receiving the hierarchical structure information of the voice recognition dictionary data corresponding to the hierarchical structure of the operation signal stored in the recognition dictionary memory 61 for a car audio operation, and outputting to the voice recognition operation unit 52 a dictionary data specifying signal used to specify voice recognition dictionary data to be referred to according to the hierarchical structure information.

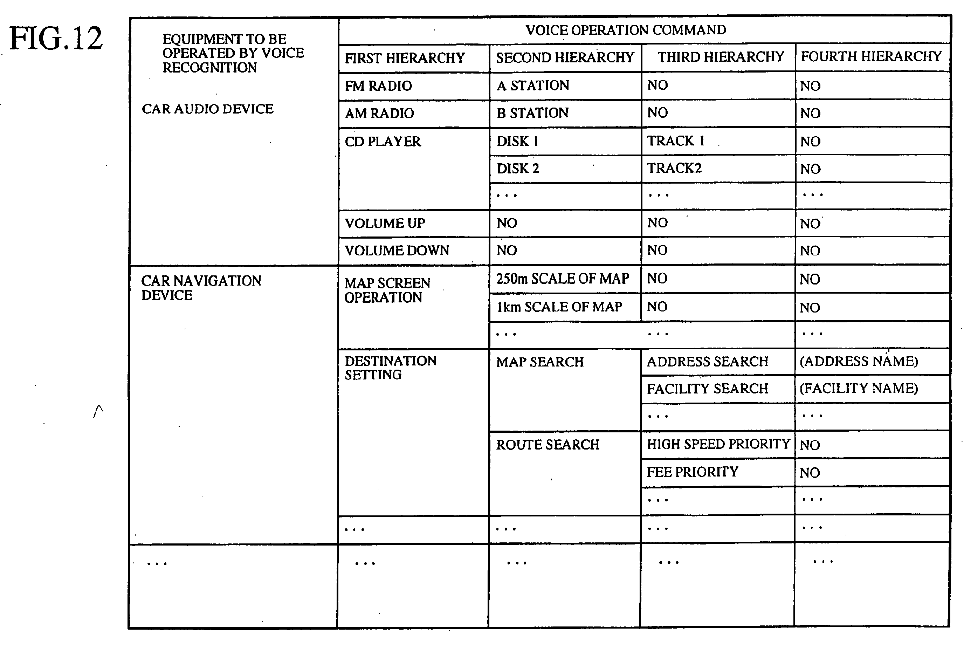

First, description will be made as to the hierarchical structure of a voice operation command. Fig. 12 shows the hierarchical structure example of the voice operation command.

For example, when the car audio device 44 activates the CD player (CD changer type), the user utters "CD PLAYER" as a voice operation command of a first hierarchy, thereby setting the CD player to a play mode. Then, a disk to be played is selected by uttering, for example "DISK 1", as a voice operation command of a second hierarchy. Then, a track to be played in the disk is selected by uttering, for example "TRACK 1", as a voice operation command of a third hierarchy. This hierarchical structure is also made obvious by the example of a car navigation device shown in Fig. 12.

Next, specific description will be made as to the processing conducted by the voice recognition device 43.

A difference of this embodiment from the voice recognition device 43 of the foregoing second exemplary system resides in that in this embodiment, a preparation is made so as to enable the car audio device 44 to transfer the hierarchical structure information of the voice recognition dictionary data to the recognition dictionary switching unit 72 in step ST22, and enables the voice recognition operation unit 52 to refer to the voice recognition dictionary data corresponding to the voice operation command of a next hierarchy based on the voice recognition result of the voice recognition operation unit 52 (steps ST23 and ST24). It is assumed that the voice recognition dictionary data has been formed in a hierarchical structure corresponding to the above-described hierarchical structure information.

In this embodiment, it is necessary to notify the hierarchical structure of the voice operation command to the voice recognition device 43. Now, this will be described in connection with the need to secure voice recognition performance.

As described above, the voice recognition operation performs a comparison between the voice recognition dictionary data prepared beforehand for comparison and the feature parameter of the inputted voice signal, and outputs a voice recognition dictionary data having the highest similarity.

In this case, as a factor for determining voice recognition performance, the size of the voice recognition dictionary data, i.e., the size of a voice operation command corresponding to the voice recognition dictionary data referred to by the comparison operation unit 16 of the voice recognition operation unit , is important. As the number of voice operation command candidates in the voice recognition dictionary is larger, misrecognition is increased as a result. This is a general tendency, though the occurrence of misrecognition depends on performance of the voice recognition operation unit 52.

Here, the misrecognition means noncoincidence between an uttered content and a recognition result.

Therefore, when an operation by voice is based on a hierarchical structure, a recognition rate can be increased by using voice recognition dictionary data limited to each hierarchy, i.e., only the voice recognition dictionary data limited to a voice operation command concerning a next equipment operation in the operation stage, for a voice recognition operation as much as possible.

Accordingly, it is advantageous that the hierarchical structure of the voice recognition dictionary data corresponding to the voice operation command is notified to the voice recognition operation unit 52, and voice recognition dictionary data corresponding to a vocabulary limited for each operation state is prepared for a comparison operation.

Thus, according to this embodiment, it is possible to carry out processing even when the operation of the equipment to be controlled is based on a complex hierarchy, and to increase a voice recognition rate.

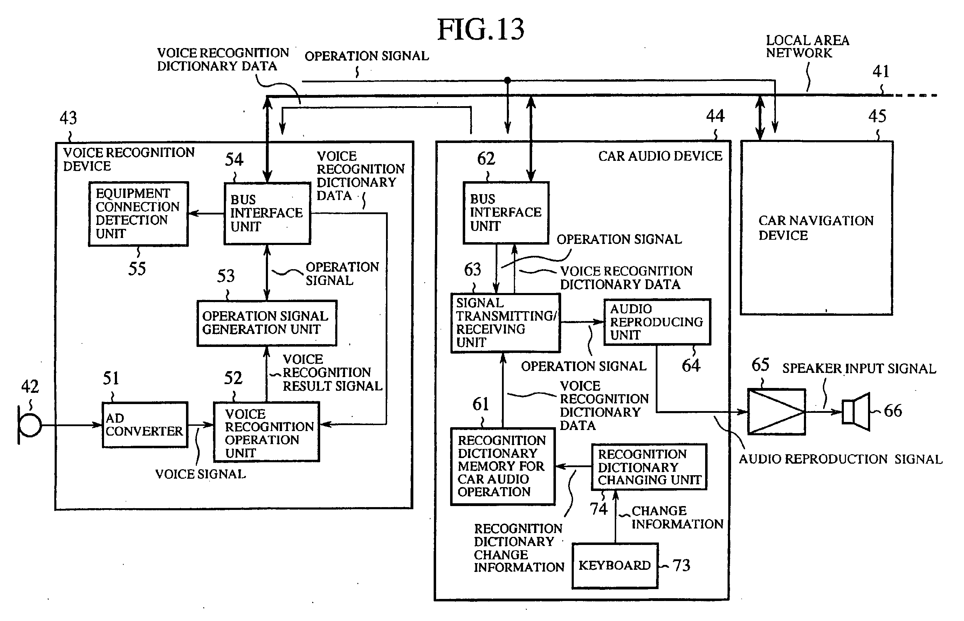

Fig. 13 is a schematic diagram showing an equipment operation system which can be used in connection with the invention. In the drawing, reference numerals similar to those of Fig. 6 denote similar or equivalent portions, and thus description thereof will be omitted.

A reference numeral 73 denotes a keyboard by which a user inputs the change information of a voice operation command; and 74 a recognition dictionary changing unit for changing the voice recognition dictionary data stored in the car audio operation recognition dictionary memory 61 according to the change information inputted from the keyboard 73. The keyboard 73 and the recognition dictionary changing unit 74 constitute changing means.

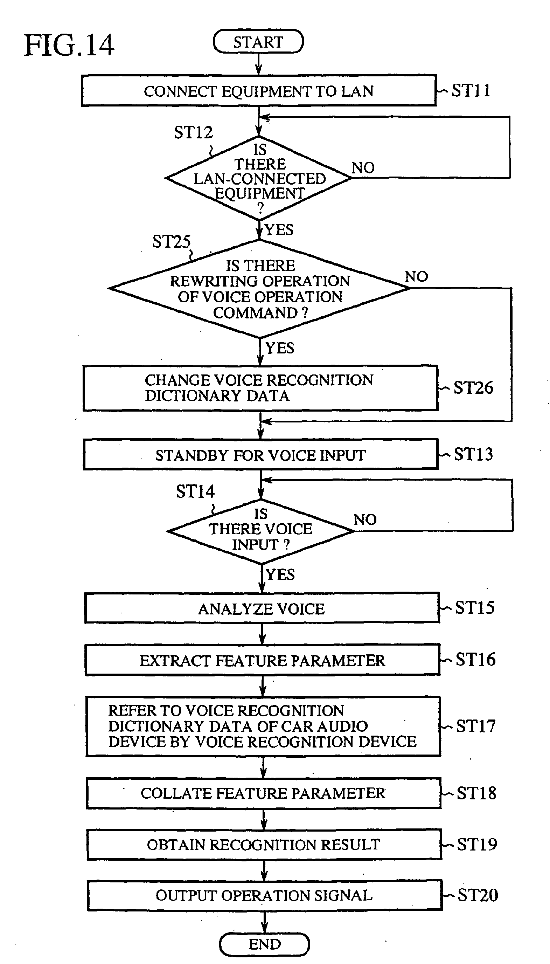

Fig. 14 is a flowchart showing the processing conducted by the voice recognition device 43 and, next, an operation will be described.

In the foregoing systems, no particular reference are made to the changing of the voice recognition dictionary data stored in the recognition dictionary memory 61 for a car audio operation. However, an arrangement may be made such that when the user inputs change information of the voice operation command by using the keyboard 73 (step ST25), the recognition dictionary changing unit 74 changes the voice recognition dictionary data stored in the recognition dictionary memory 61 for a car audio operation according to the change information of the voice operation command (step ST26).

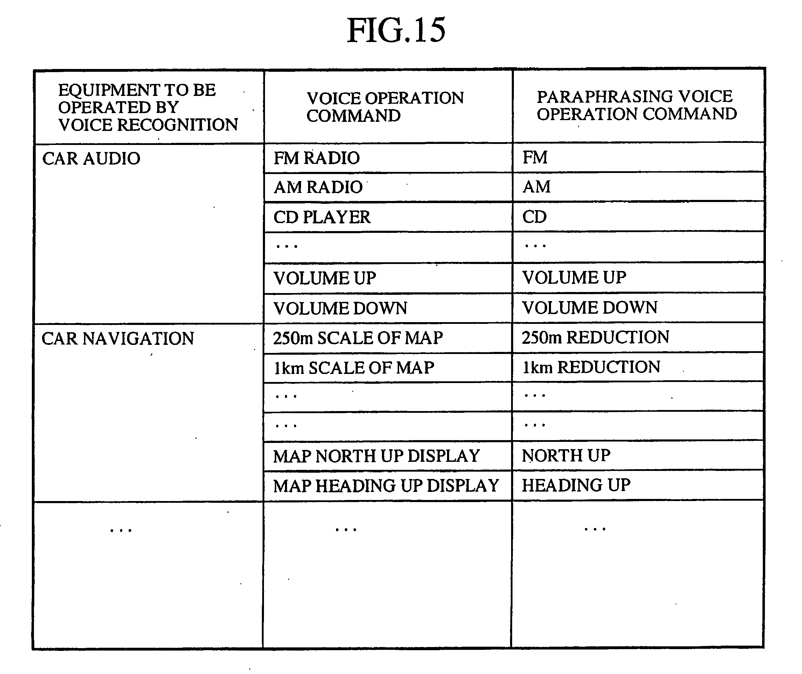

Fig. 15 shows the example of paraphrasing "FM RADIO" as a voice operation command to "FM". The paraphrasing of the voice operation command may be performed at any time when the user desires. Dealing with this situation makes it possible to secure the extendability of a voice operation command following the connection of a new equipment to be controlled to the local area network 41, following a change in the specifications of the controlled equipment and so on

In the foregoing systems, the car audio device 44 and the car navigation device 45 are illustrated as the controlled equipments for performing operations by voice recognition. However, the equipments are not limited to such, and any equipments connected to the local area network 41, e.g., information devices such as a personal computer, a car computer, so on, home electric appliances such as a refrigerator, a washing machine, and so on, are similarly advantageous.

In addition, in the foregoing systems, the controlled equipment connected by using the local area network 41, and so on, are illustrated. However, there should be no limitation placed in this regard, and a similar advantage can be provided by using, e.g., a local area network composed of a wireless medium such as a radio wave, an optical a light or the like.

Though no particular reference is made in the foregoing systems, display means may be provided for displaying the type of the controlled equipment connected to the local area network 41, and also information regarding the controlled equipment to be operated by voice.

As a result, it is possible for the user to understand the type of the controlled equipment connected to the local area network 41, and the controlled equipment to be operated by voice.

### Industrial Applicability

As apparent from the foregoing, the equipment operation system and the equipment operation method of the present invention are suitable for accepting an operation by voice for the purpose of contributing to safe driving, in a case where a situation undesirable on safety may occur, for example if a driver manually operates the equipment such as the car audio device during the driving state of the automobile..

## Claims

1. An equipment operation system comprising:
a voice recognition device (43) including
a voice recognition operating unit (52) for executing a voice recognition operation and outputting a voice recognition result signal and an operation signal generating unit (53) for generating an operation signal from a voice recognition result signal outputted from the voice recognition operation unit (52);
a communication means (41) by way of which the operation signal specified by the operation signal generating unit (53) is outputted; and an equipment (44) to be controlled, including
a first storing means (61) for storing voice recognition dictionary data and
operation means (64) for executing a predetermined operation corresponding to the operation signal when the operation signal is outputted from the communication means (41),
said equipment (44) to be controlled transfers the voice recognition dictionary data stored in the first storing means (61) and hierarchical structure information to the voice recognition device (43) through the communication means (41) at the time of actuating the system, the voice recognition device (43) having a recognition dictionary memory (71) to store said transferred voice recognition dictionary data,
the voice recognition operating unit (52) comprising
a voice analysis unit (14) for outputting spectrum data,
a vector quantization unit (15) for classifying the spectrum data obtained from the voice analysis unit (14) and outputting feature parameters corresponding to the spectrum data and
a comparison operation unit (16) for performing a comparison operation between the feature parameter outputted by the vector quantization unit (15) and the voice recognition dictionary data stored in the recognition dictionary memory (71) and outputting a voice recognition result signal,
the voice recognition device (43) further includes a recognition dictionary switching unit (72) for outputting to the voice recognition operation unit (52) a dictionary data specifying signal used to specify the voice recognition dictionary data to be referred to by the comparison operation unit (16) according to the hierarchical structure information.

2. The equipment operation system according to claim 1, wherein the equipment (44) to be controlled includes a changing means (74) for changing the voice recognition dictionary data stored in the first storing means (61).

3. The equipment operation system according to claim 1, wherein displaying means is provided for displaying the type of the equipment (44) to be controlled, said equipment (44) being connected by the communication means (41), and also displaying information indicating an equipment capable of being operated by voice.

## Patentansprüche

1. System zum Betreiben eines Geräts, welches aufweist:
eine Spracherkennungsvorrichtung (43), enthaltend
eine Spracherkennungs-Operationseinheit (52) zum Ausführen einer Spracherkennungsoperation und
zum Ausgeben eines Spracherkennungs-Ergebnissignals, und eine Operationssignal-Erzeugungseinheit (53) zum Erzeugen eines Operationssignals aus einem von der Spracherkennungs-Operationseinheit (52) ausgegebenen Spracherkennungs-Ergebnissignal;
eine Kommunikationsvorrichtung (41), durch die das durch die Operationssignal-Erzeugungseinheit (53) spezifizierte Operationssignal ausgegeben wird; und
ein zu steuerndes Gerät (44), enthaltend
eine erste Speichervorrichtung (61) zum Speichern von Spracherkennungs-Dateilistendaten und
eine Operationsvorrichtung (64) zum Ausführen einer vorbestimmten Operation entsprechend dem Operationssignal, wenn das Operationssignal von der Kommunikationsvorrichtung (41) ausgegeben wird,
welches zu steuernde Gerät (44) die in der ersten Speichervorrichtung (61) gespeicherten Spracherkennungs-Dateilistendaten und hierarchische Strukturinformationen zu der Zeit der Betätigung des Systems über die Kommunikationsvorrichtung (41) zu der Spracherkennungsvorrichtung (43) überträgt, wobei die Spracherkennungsvorrichtung (43) einen Erkennungsdateilistenspeicher (71) zum Speichern der übertragenen Spracherkennungs-Dateilistendaten hat,
welche Spracherkennungs-Operationseinheit (52) aufweist:
eine Sprachanalyseeinheit (14) zum Ausgeben von Spektrumdaten,
eine Vektorquantisierungseinheit (15) zum Klassifizieren der von der Sprachanalyseeinheit (14) erhaltenen Spektrumdaten und zum Ausgeben von Merkmalsparametern entsprechend den Spektrumdaten, und
eine Vergleichsoperationseinheit (16) zum Durchführen einer Vergleichsoperation zwischen dem von der Vektorquantisierungseinheit (15) ausgegebenen Merkmalsparameter und den in dem Erkennungsdateilistenspeicher (71) gespeicherten Spracherkennungs-Dateilistendaten, und zum Ausgeben eines Spracherkennungs-Ergebnissignals, welche Spracherkennungsvorrichtung (43) weiterhin eine Erkennungsdateilisten-Schalteinheit (72) zum Ausgeben eines Dateilistendaten-Spezifizierungssignals, das zum Spezifizieren der Spracherkennungs-Dateilistendaten, auf die von der Vergleichsoperationseinheit (16) Bezug zu nehmen ist, gemäß den hierarchischen Strukturinformationen verwendet wird, zu der Spracherkennungs-Operationseinheit (52) enthält.

2. System zum Betreiben eines Geräts nach Anspruch 1, bei dem das zu steuernde Gerät (44) eine Änderungsvorrichtung (74) zum Ändern der in der ersten Speichervorrichtung (61) gespeicherten Spracherkennungs-Dateilistendaten enthält.

3. System zum Betreiben eines Geräts nach Anspruch 1, bei dem eine Anzeigevorrichtung zum Darstellen des Typs des zu steuernden Geräts (44), welches Gerät (44) durch die Kommunikationsvorrichtung (41) verbunden ist, und auch zum Darstellen von Informationen, die ein Gerät anzeigen, das in der Lage ist, durch Sprache betätigt zu werden, vorgesehen ist.

## Revendications

1. Système d'actionnement d'équipement, comprenant :
un dispositif de reconnaissance vocale (43), incluant :
une unité fonctionnelle de reconnaissance vocale (52) permettant d'exécuter une opération de reconnaissance vocale et de délivrer un signal résultant de reconnaissance vocale, et une unité génératrice de signal fonctionnel (53) permettant de générer un signal fonctionnel à partir de signal résultant de reconnaissance vocale délivré par l'unité fonctionnelle de reconnaissance vocale (52) ;
des moyens de communication (41) grâce auxquels le signal fonctionnel spécifié par l'unité génératrice de signal fonctionnel (53) est délivré ; et un équipement (44) devant être commandé, incluant :
des premiers moyens de stockage (61) permettant de stocker les données de dictionnaire de reconnaissance vocale, et
des moyens fonctionnels (64) permettant d'exécuter une opération prédéterminée correspondant au signal fonctionnel lorsque le signal fonctionnel est délivré par les moyens de communication (41),
ledit équipement (44) devant être commandé transfère les données de dictionnaire de reconnaissance vocale stockées dans les premiers moyens de stockage (61) et les informations de structure hiérarchique au dispositif de reconnaissance vocale (43) par l'intermédiaire des moyens de communication (41) au moment de l'actionnement du système, le dispositif de reconnaissance vocale (43) comportant une mémoire de dictionnaire de reconnaissance (71) permettant de stocker lesdites données de dictionnaire de reconnaissance vocale transférées,
l'unité fonctionnelle de reconnaissance vocale (52) comprenant :
une unité d'analyse vocale (14) permettant de délivrer des données spectrales,
une unité de quantification vectorielle (15) permettant de classer les données spectrales obtenues à partir de l'unité d'analyse vocale (14) et de délivrer les paramètres caractéristiques correspondant aux données spectrales et
une unité fonctionnelle de comparaison (16) permettant de réaliser une opération de comparaison entre le paramètre caractéristique délivré par l'unité de quantification vectorielle (15) et les données de dictionnaire de reconnaissance vocale stockées dans la mémoire de dictionnaire de reconnaissance (71) et de délivrer un signal résultant de reconnaissance vocale,
le dispositif de reconnaissance vocale (43) inclut en outre une unité de commutation de dictionnaire de reconnaissance (72), permettant de délivrer à l'unité fonctionnelle de reconnaissance vocale (52) un signal spécifiant les données de dictionnaire, utilisé pour spécifier les données de dictionnaire de reconnaissance vocale à laquelle doit se référer l'unité fonctionnelle de comparaison (16) en fonction des informations de structure hiérarchique.

2. Système d'actionnement d'équipement selon la revendication 1, dans lequel l'équipement (44) devant être commandé inclut des moyens modificateurs (74) permettant de modifier les données de dictionnaire de reconnaissance vocale stockées dans les premiers moyens de stockage (61).

3. Système d'actionnement d'équipement selon la revendication 1, dans lequel des moyens d'affichage sont prévus afin d'afficher le type d'équipement (44) devant être commandé, ledit équipement (44) étant connecté grâce aux moyens de communication (41), et affichant également les informations indiquant un équipement capable d'être actionné sous l'effet de la voix.
